# EUROPEAN PATENT SPECIFICATION

(11) **EP 2 525 106 B1**
(45) Date of publication and mention of the grant of the patent: **09.03.2016**
(21) Application number: 12168268.6
(22) Date of filing: 16.05.2012
(51) Int. Cl.: F16B 12/20

(54) **Device for joining two panels of a piece of furniture together**
Vorrichtung zur Verbindung von zwei Platten eines Möbelstücks miteinander
Dispositif de raccordement ensemble de deux panneaux d'un élément de mobilier

(30) Priority: 19.05.2011 ES 201130813
(43) Date of publication of application: 21.11.2012
(73) Proprietor: Rioja Calvo, Miguel Angel, 20800 Zarautz (Guipuzcoa) (ES)
(72) Inventor: Rioja Calvo, Miguel Angel, 20800 Zarautz (Guipuzcoa) (ES)
(74) Representative: Hirsch & Associés

(56) References cited:
- EP-A1- 1 469 206
- WO-A2-2008/076089
- DE-U1- 7 814 325
- US-A- 3 264 019
- US-A- 5 743 670

## Description

This invention concerns a device to connect by means of pressure, but with the possibility of disassembly, panels of furniture or similar, such that, in the connection, the edge of one of them is applied to one facet of the other panel.

In particular, the invention applies to connection systems of a general composition known from prior art, consisting of a first panel having a junction box on one of its larger facets that is open to an adjacent edge of the same, which junction contains a cylindrical tensile support consisting of two symmetric, semi-cylindrical parts on the diametrical plane perpendicular to that edge and having a tensile axis that is also perpendicular to the edge, and that is actuated rotationally by a gear assembly, and a second panel of which the facet connecting with the first panel has a blind or through hole that may be aligned with the tensile access, and may incorporate (or not) a plug or a nut within it.

### PRIOR ART

These devices must be designed to satisfy a series of conditions, such as: the ability to be installed so as to be well concealed in the structure of the furniture, to be accessible to allow for easy handling, a simple composition, and efficiency in connecting the two panels.

The latter condition merits special consideration, as the connection must not leave gaps between the panels connected; otherwise, the aesthetic effect would be negative both in terms of appearance and in terms of giving an impression of low quality to the furniture as a whole; however, especially the fact that a connection with an attachment defect adversely affects the strength and structural stability of the furniture, particularly when the same piece of furniture has connections with defects of different dimensions.

In this regard, devices are known such as that of the German utility model DE7814325U1. This model includes various solutions involving sets of cogwheels to actuate the forward/backward motion of a "tensor screw" belonging to a mechanism within the casing built into one of the panels to be connected, and which is the one that will form the connection by screwing into a blind hole of the other of the two panels to be connected, whether directly or by means of a fitting previously built into this second panel. In this case, the various solutions involving sets of cogwheels have in common the use of a "tensor screw" of a length that is such that, when the point reaches the bottom of the blind hole (or the plug built into it), the back end is still within the casing of the device; thus, the mere fact that the front end of the threaded rod reaches the bottom of the blind hole or the plug contained within it, does not ensure that the connection between both panels will be perfect, without separation groves; no matter how much one continues turning the threaded rod, there is nothing that will push the panel in which the casing of the metal parts is located.

With regard to the convenience of the device being well concealed in the structure of the furniture, this is not merely an aesthetic question related to the condition of the assembled piece of furniture; the device installed in the aforementioned first panel must also not allow the point of the tensor screw to protrude beyond the edge of this first panel when the furniture has not yet been installed. Otherwise, if the devices are installed in the first panel before beginning assembly, packaging and shipping become difficult, apart from the risk of causing physical damage to the assembler and/or other parts of the furniture during assembly; the alternative would be to carry the devices in a separate package. Additionally, if we imagine a shelving unit consisting of various shelves between two panels like the first panel, if the point of the screw cannot be concealed completely in the casing of the device, in order to change the height of a shelf, one of the first panels must be completely released.

### EXPLANATION OF THE INVENTION AND ITS BENEFITS

Under these circumstances, the invention proposes a connecting device for systems having the general composition described in the subject-matter of the invention, consisting of a tensile support with a serrated washer, axially fixated, having peripheral radial external teeth corresponding in shape to the existing gear recesses in one opposite face of the drive crown, the opposite face of which has an actuator groove; the tensor axis is a tensor screw with a threaded point connected to a central non-cylindrical body and a head, and at least one threaded area of the tensor screw is in contact with an inner wall of the tensile support; the serrated washer has a non-cylindrical central hole corresponding in shape to the section of the non-cylindrical central body of the tensor screw, forming a keyed insertion. The dimension of the operative range of the tensor screw between its extreme retracted position within the tensile support and its extreme extended position, is preferably less than the depth of the blind or through-hole or the length of the internal threading of the plug. The operative range of the tensor screw is limited by the serrated washer or an internal part of the tensile support. One variant consists of at least one internal wall (3a) being a continuous cylindrical wall, with threading reciprocal to that of the head (5b) of the tensor screw.

For the set of configurations and measures of the following sections of the screw, the composition contemplated makes possible a sequential operation to make the connection, ensuring perfect connection of both panels. Once the first and second panels have been positioned in the manner in which they will be connected, when the turning means of the drive crown is pushed with the actuator tool, the serrated washer is turned, and, with it, the tensor screw, which advances because its threaded head either threads in the internal partitions, or threads with the reciprocal thread of the variant with the continuous cylindrical wall; the advance is guided axially by the path adjusted by means of the threaded washer and by the action between the threaded head and the internal wall; at a certain point, the threaded point begins to interlock with the plug of the second panel, causing the two panels to begin approaching each other; when the tensor screw has completed its operation and its threaded head can no longer continue advancing, if the turning means continues to be pushed, the drive crown is the threaded head of the tensor screw, which can continue interlocking with the plug of the second panel until the complete connection of both panels, as the possibility of interlocking in the plug is preferably greater than the operative range of the tensor screw. The aforementioned applies equally to cases in which the screw directly interlocks with the blind hole for lack of the aforementioned plug within it.

### DRAWINGS AND REFERENCES

In order to better understand the nature of the invention, the attached drawings show an industrial embodiment, which is provided by way of example only.

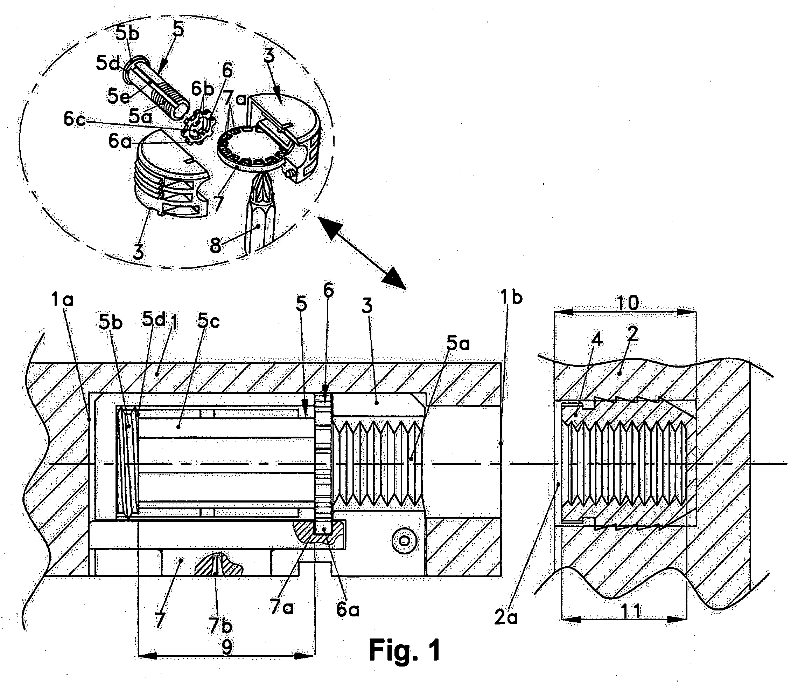

Fig. 1 shows a first panel (1) and a second panel (2) positioned in order to be connected and sectioned by the common medial plane of the junction box (1a) and the hole (2a), blind here, which are axially aligned. The first panel (1) contains a device disclosed by the invention showing the device disclosed by the invention with the tensor screw (5) in its retracted position and relating to partial sections that facilitate visualisation of the coupling between a radial peripheral tooth (6a) and an engaging recess (7a) and the actuator groove (7b). The second panel (2) contains a plug (4). This figure also shows an exploded view of the breakdown of the device.
Fig. 2 shows the device disclosed by the invention, shown as in fig. 1, but with the tensor screw (5) in an intermediate position in its operative range (9); the internal wall (3a) of the tensile support (3) can be seen.
Fig. 3 is an exploded view showing the breakdown of the device disclosed by the invention, incorporating one of the possible embodiments of the tensor screw (5).
Fig. 4 is a representation similar to fig. 3, but seen from an angle that shows the recesses (7a) of the drive crown (7); this figure shows another embodiment of the tensor screw (5).
Fig. 5, 7, 9, 11, 13, and 15 show various embodiments of the tensor screw (5) in profile.
Fig. 6, 8, 10, 12, 14, and 16 are the respective front views of fig. 5, 7, 9, 11, 13, and 15.
Fig. 17 - 20 show the operational sequence of the device disclosed by the invention to connect a first panel (1) with a second panel (2).

These figures use the following references:
- 1.-: First panel
- 1a.-: Junction box in first panel (1)
- 1b.-: Lateral opening of junction box (1a)
- 2.-: Second panel
- 2a.-: Blind hole or through hole in second panel (2)
- 3.-: Tensile support
- 3a.-: Inner wall of the tensile support (3)
- 4.-: Plug in hole (2a), blind or through
- 5.-: Tensor screw
- 5a.-: Threaded tip of tensor screw (5)
- 5b.-: Head of tensor screw (5)
- 5c.-: Non-cylindrical central body of tensor screw (5)
- 5d.-: Rear projection in smooth body (5c)
- 5e-: Keyway of tensor screw (5)
- 6.-: Serrated washer
- 6a.-: Peripheral radial teeth of the serrated washer (6)
- 6b.-: Keys in serrated washer (6)
- 6c.-: Non-cylindrical central hole in the serrated washer (6)
- 7.-: Drive crown
- 7a.-: Engagement recesses of the drive crown (7)
- 7b.-: Actuator groove in drive crown (7)
- 8.-: Turning tool
- 9.-: Operative range of the screw (5)
- 10.-: Depth of the hole (2a), blind or through
- 11.-: Length of the internal threading of the plug (4)

### DESCRIPTION OF A PREFERRED EMBODIMENT

In relation to the foregoing drawings and references, the attached drawings show a preferred embodiment of the invention, relating to a device to connect two panels of a piece of furniture, having a known, consistent composition (fig. 1) in a first panel (1), one of the larger facets of which has a junction box (1a) with a lateral opening (1b) open to an edge adjacent to it, the junction box (1a) where a tensile support(3) is fitted, usually cylindrical and consisting of two semi-cylindrical parts, symmetrical on the diametrical plane perpendicular to that edge and having a tensile axis that is also perpendicular to this edge, actuated for turning by means of a gear assembly, and a second panel (2) with a facet connecting to the first panel (1) that has a blind or through hole (2a) that can be aligned with the tensile axis and usually having (or not having) a plug (4) or a nut contained in the same.

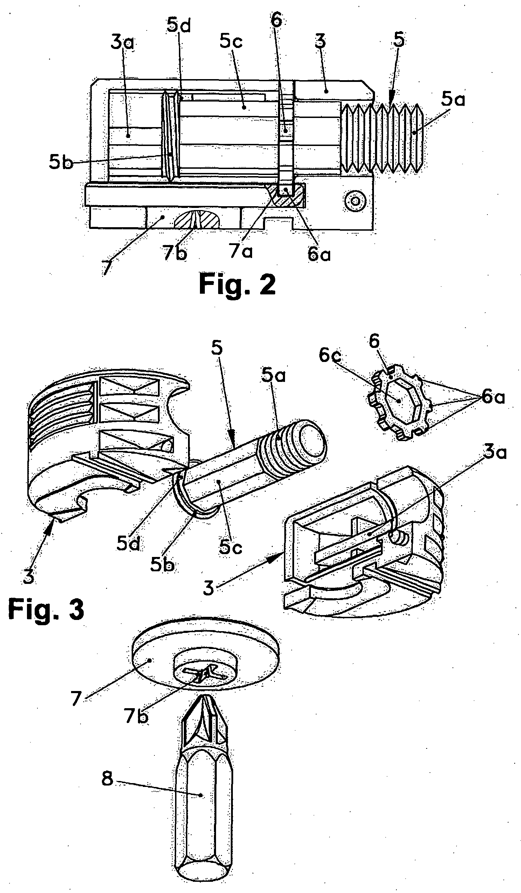

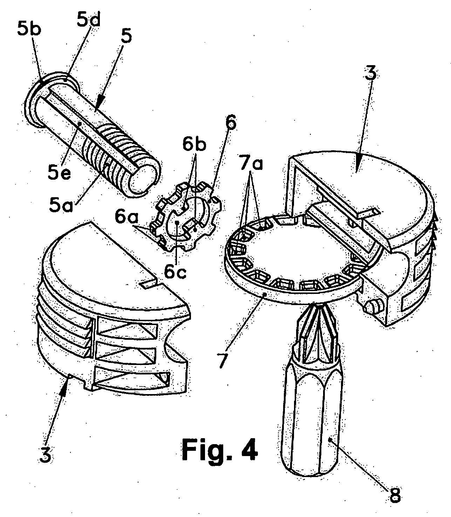

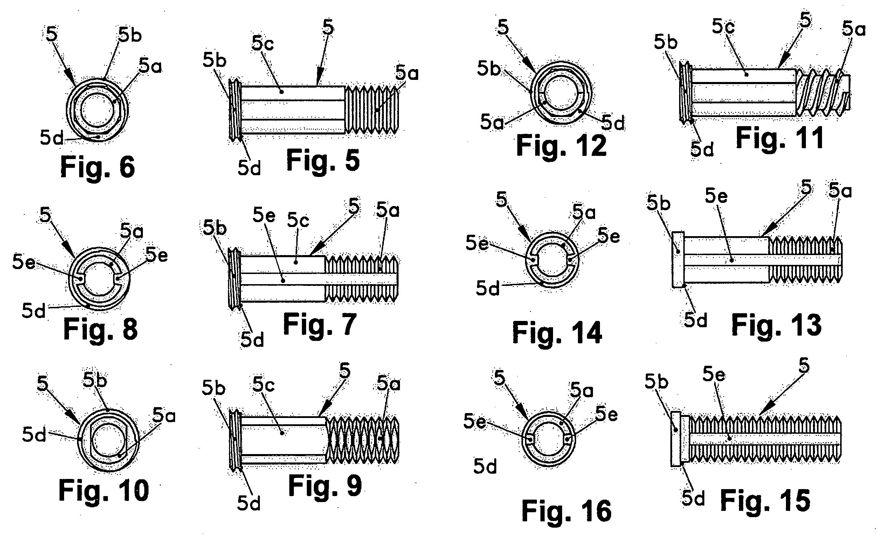

Fig. 1 - 4 clearly shows the invention, consisting of a tensile support (3) with a serrated washer (6), axially fixated, having peripheral radial external teeth (6a) corresponding in shape to the existing gear recesses (7a) in one opposite face of the drive crown (7), the opposite face of which has an actuator groove (7b); the tensor axis is a tensor screw (5) with a threaded point (5a) connected to a central non-cylindrical body (5c) and a head (5b), and at least one threaded area (5a-5b) of the tensor screw (5) is in contact with an inner wall (3a) of the tensile support (3); the serrated washer (6) has a non-cylindrical central hole (6c) corresponding in shape to the section of the non-cylindrical central body (5c) of the tensor screw (5), forming a keyed insertion. The dimension of the operative range (9) of the tensor screw (5) between its extreme retracted position within the tensile support (3) and its extreme extended position, is preferably less than the depth (10) of the blind or through-hole (2a) or the length of the internal threading (11) of the plug (4). The operative range (9) of the tensor screw (5) is limited by the serrated washer (6) or an internal part (3a) of the tensile support (3). In fig. 1, the tensor screw (5) is in its extreme retracted position, with the front part of the central body (5c) having already passed through the hole in the serrated washer (6), which has a peripheral radial tooth (6a) engaged in an engagement recess (7a) of the drive crown (7); fig. 1 shows the characteristic elevations of the invention, related to the operative range (9) of the tensor screw (5), the depth (10) of the blind hole (2a), and the length of the internal threading (11) of the plug (4), which, in this case, is positioned in the blind hole (2a). Fig. 3 and 4 show in detail the configuration of the components of the device; in each case, the tensor screw (5) and the serrated washer (6) are shown according to differing variants amongst those falling within the invention, some of which are shown in fig. 5 - 12.

According to the invention, one variant in which at least one internal wall (3a) is a continuous cylindrical wall and has cut into it a reciprocal threading to that of the head (5b) of the tensor screw (5), which is the option used in fig. 1 and 2.

There are many possible variants for the reciprocal configurations of the central body (5c) and the hole in the serrated washer (6). Fig. 5 and 6 show the variant elected for fig. 1 - 3, where the central body (5c) has a polygonal section reciprocal to the central non-cylindrical hole (6c) in the serrated washer (6), an octagonal polygonal section. Fig. 7 and 8 show the variant elected for fig. 4, consisting of the central body (5c), which has at least one keyway (5e), which is reciprocal to at least one key (6b), protruding into the non-cylindrical central hole (6c) in the serrated washer (6). Fig. 9 and 10 show a variant in which the central body (5c) has a mixed section with curved and rectilinear parts, which is reciprocal to the central non-cylindrical hole (6c) in the serrated washer (6). Fig. 13 and 14 show a variant in which the head (5b) of the tensor screw (5) is not threaded. Another possible variant, shown in fig. 15 and 16, consists of the tensor screw (5) being threaded over its entire length, and having at least one keyway (5e).

If no plug (4) or nut is inserted in the blind or through-hole (2a), the threaded end (5a) of the screw (5) has a self-threading filleting for wood, an option shown in fig. 11 and 12.

According to another peculiarity of the invention, the rear protrusion (5d) of the central body (5c), applied to the serrated washer (6) or an internal part of the tensile support (3), is the frontal aspect of the threaded head (5b), as shown in all drawings.

The scope of the invention includes an option in which the peripheral radial teeth (6a) and the engaging recesses (7a) are formed reciprocally as a conical gear assembly.

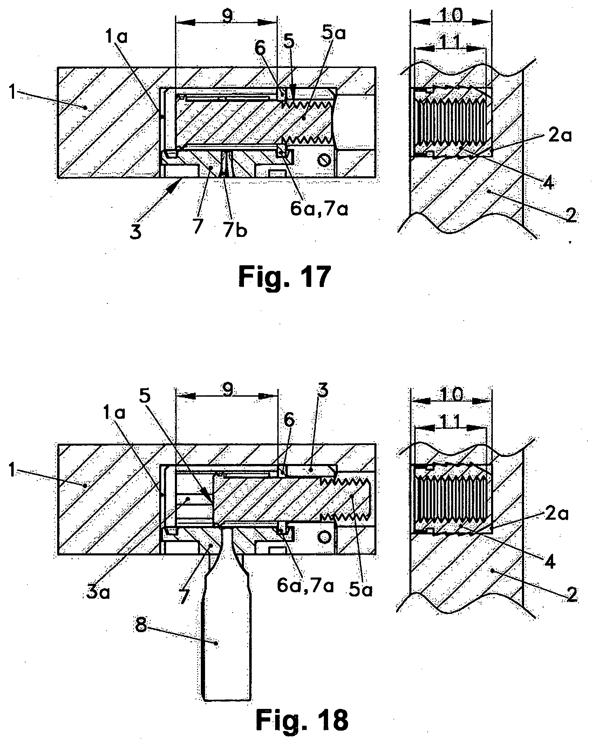

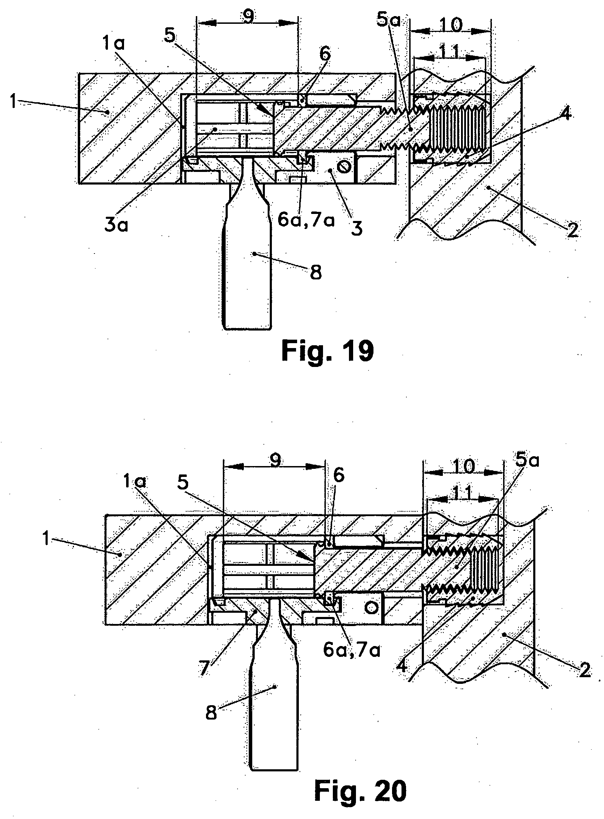

The operation of the device is shown by means of fig. 17 - 20, explaining the sequence of actions required to connect the first panel (1) and the second panel (2). Obviously, it consists of a first operation in which (fig. 15) the first panel (1) and the second panel (2) are positioned in the relative position in which they will be connected, turning the drive crown (7), turning the serrated washer (6) with the tool (8), and, with it, the central body (5c), i.e., the tensor screw (5), which, due to the threading of its threaded head (5b) on the internal wall (3a), advances (fig. 16) until it begins to engage (fig. 17) in the plug (4) ; when the tensor screw (5) has completed its operation (9) and the first panel (1) and the second panel (2) are connected, its threaded end (5a) can still thread with the plug (4) and tighten the connection until there is no gap between the panels (1, 2).

The drawings also show that, in its retracted position, the tensor screw (5) is totally concealed in the tensile support (3), making it possible for it to be installed in the first panel until the assembly point, facilitating packaging and shipping, as well as handling without risk of damage to persons or materials. Additionally, once a shelving unit has been built, a shelf can be repositioned by merely disassembling that shelf and replacing it in a new position.

## Claims

1. Device for connecting two panels of a piece of furniture, having a first panel (1) with a junction box (1a) having one lateral opening (1b) on one of its larger facets, open to an edge adjacent to it, which junction box (1a) contains a tensile support (3), usually cylindrical and consisting of two semi-cylindrical parts symmetrical along the diametrical plane perpendicular to that edge and having a tensile axis that is also perpendicular to this edge, and which is turned by means of a gear assembly, and a second panel (2), having a blind or through-hole (2a) on the facet connecting with the first panel (1), which may be aligned with the tensile axis, and usually contains (or does not contain) a plug (4) or a nut, **characterized in that** the tensile support (3) contains a serrated washer (6), axially fixated, which has external peripheral radial teeth (6a) with corresponding in shape to the engagement recesses (7a) on a facet facing the drive crown (7), having an actuator groove on its opposite facet (7b); the tensile axis is a tensor screw (5) with a threaded end (5a), connected with a non-cylindrical central body (5c) and a head (5b), and at least one threaded area (5a-5b) of the tensor screw (5), in contact with an internal wall (3a) of the tensile support (3); the serrated washer (6) has a non-cylindrical central hole (6c) corresponding in shape to the section of the non-cylindrical central body (5c) of the tensile screw (5), forming a keyed insertion;

2. Device for connecting two panels of a piece of furniture according to claim 1, **characterized in that** the dimension of the operative range (9) of the tensor screw (5) between its extreme retracted position within the tensile support (3) and its extreme extended position, is preferably less than the depth (10) of the blind or through-hole (2a) or the length of the internal threading (11) of the plug (4).

3. Device for connecting two panels of a piece of furniture according to claim 1, **characterized in that** the operative range (9) of the tensor screw (5) is limited by the serrated washer (6) or an internal part (3a) of the tensile support (3).

4. Device for connecting two panels of a piece of furniture, according to claim 1, **characterized in that** the at least one internal wall (3a) is a continuous, cylindrical wall having threading reciprocal to that of the head (5b) of the tensor screw (5).

5. Device for connecting two panels of a piece of furniture, according to claim 1, **characterized in that** the central body (5c) has a polygonal section reciprocal to the non-cylindrical central hole (6c) of the serrated washer (6).

6. Device for connecting two panels of a piece of furniture, according to claim 1, **characterized in that** the central body (5c) has at least one keyway (5e) that is reciprocal to at least one key (6b), protruding into the non-cylindrical central hole (6c) of the serrated washer (6).

7. Device for connecting two panels of a piece of furniture, according to claim 1, **characterized in that** the central body (5c) has a mixed section with curved and rectilinear parts, which is reciprocal to the non-cylindrical central hole (6c) of the serrated washer (6).

8. Device for connecting two panels of a piece of furniture according to claim 1, **characterized in that** the threaded end (5a) has self-threading filleting for wood.

9. Device for connecting two panels of a piece of furniture according to the first claim, **characterized in that** the rear protrusion (5d) of the central body (5c), which is applied to the serrated washer (6) or an internal part of the tensile support (3) is the frontal facet of the head (5b).

10. Device for connecting two panels of a piece of furniture, according to claim 1, **characterized in that** the radial peripheral teeth (6a) and the engaging recesses (7a) are cut reciprocally in the form of a conical gear assembly.

11. Device for connecting two panels of a piece of furniture, according to claim 1, **characterized in** which the tensor screw (5) is threaded over its entire length, and has at least one keyway (5e).

12. Device for connecting two panels of a piece of furniture according to claim 1, **characterized in that** the head (5b) of the tensor screw (5) is not threaded.

## Patentansprüche

1. Vorrichtung zur Verbindung von zwei Platten eines Möbelstücks, das eine erste Platte (1) mit einem Verbindungsraum (1a), der eine seitliche Öffnung (1b) an einer ihrer größeren Seitenflächen aufweist, die zu einem dazu benachbarten Rand hin offen ist, wobei der Verbindungsraum (1a) einen gewöhnlich zylindrischen Zughalter (3) enthält, der aus zwei halbzylindrischen Teilen besteht, die entlang der Durchmesserebene senkrecht zu dem Rand symmetrisch sind, und eine Zugachse aufweist, die ebenfalls senkrecht zu diesem Rand verläuft und die mittels einer Eingriffanordnung gedreht wird, und eine zweite Platte (2) aufweist, die eine Blind- oder Durchgangsbohrung (2a) an der Seitenfläche aufweist, die mit der ersten Platte (1) verbunden wird, die nach der Zugachse ausgerichtet sein kann und gewöhnlich einen Einsatz (4) oder eine Mutter enthält (oder nicht enthält), **dadurch gekennzeichnet, dass** der Zughalter (3) eine axial fixierte gezahnte Scheibe (6) enthält, die äußere, am Rand befindliche Radialzähne (6a) aufweist, deren Form den Eingriffvertiefungen (7a) an einer Seitenfläche entspricht, die der Drehscheibe (7) zugewandt ist, die eine Betätigungselementnut auf ihrer gegenüberliegenden Seitenfläche (7b) aufweist; die Zugachse eine Spannschraube (5) mit einem Gewindeende (5a) ist, das mit einem nicht zylindrischen mittigen Körper (5c) und einem Kopf (5b) verbunden ist, und mindestens ein mit einem Gewinde versehener Bereich (5a-5b) der Spannschraube (5) in Berührung mit einer Innenwand (3a) des Zughalters (3); die gezahnte Scheibe (6) eine in der Form dem Querschnitt des nicht zylindrischen mittigen Körpers (5c) der Zugschraube (5) entsprechende nicht zylindrische mittige Bohrung (6c) aufweist, die ein Naseneinsatzteil bildet.

2. Vorrichtung zur Verbindung von zwei Platten eines Möbelstücks nach Anspruch 1, **dadurch gekennzeichnet, dass** die Abmessung des wirksamen Bereichs (9) der Spannschraube (5) zwischen ihrer äußersten in den Zughalter (3) zurückgezogenen Stellung und ihrer äußersten ausgestreckten Stellung vorzugsweise geringer ist als die Tiefe (10) der Blind- oder Durchgangsbohrung (2a) oder die Länge des Innengewindes (11) des Einsatzes (4).

3. Vorrichtung zur Verbindung von zwei Platten eines Möbelstücks nach Anspruch 1, **dadurch gekennzeichnet, dass** der wirksame Bereich (9) der Spannschraube (5) durch die gezahnte Scheibe (6) oder einen inneren Teil (3a) des Zughalters (3) eingeschränkt ist.

4. Vorrichtung zur Verbindung von zwei Platten eines Möbelstücks nach Anspruch 1, **dadurch gekennzeichnet, dass** die mindestens eine Innenwand (3a) eine durchgängige zylindrische Wand mit einem Gewinde ist, das auf das des Kopfs (5b) der Spannschraube (5) abgestimmt ist.

5. Vorrichtung zur Verbindung von zwei Platten eines Möbelstücks nach Anspruch 1, **dadurch gekennzeichnet, dass** der mittige Körper (5c) einen vieleckigen Querschnitt abgestimmt auf die nicht zylindrische mittige Bohrung (6c) der gezahnten Scheibe (6) aufweist.

6. Vorrichtung zur Verbindung von zwei Platten eines Möbelstücks nach Anspruch 1, **dadurch gekennzeichnet, dass** der mittige Körper (5c) mindestens eine Nasennut (5e) aufweist, die auf mindestens eine Nase (6b) abgestimmt ist, die in die nicht zylindrische mittige Bohrung (6c) der gezahnte Scheibe (6) ragt.

7. Vorrichtung zur Verbindung von zwei Platten eines Möbelstücks nach Anspruch 1, **dadurch gekennzeichnet, dass** der mittige Körper (5c) einen gemischten Querschnitt mit gekrümmten und geradlinigen Teilen aufweist, der auf die nicht zylindrische mittige Bohrung (6c) der gezahnten Scheibe (6) abgestimmt ist.

8. Vorrichtung zur Verbindung von zwei Platten eines Möbelstücks nach Anspruch 1, **dadurch gekennzeichnet, dass** das Gewindeende (5a) selbstbohrende Kehlflächen für Holz aufweist.

9. Vorrichtung zur Verbindung von zwei Platten eines Möbelstücks nach Anspruch 1, **dadurch gekennzeichnet, dass** die hintere Vorwölbung (5d) des mittigen Körpers (5c), die an die gezahnte Scheibe (6) oder einen inneren Teil des Zughalters (3) angelegt wird, die vordere Seitenfläche des Kopfs (5b) ist.

10. Vorrichtung zur Verbindung von zwei Platten eines Möbelstücks nach Anspruch 1, **dadurch gekennzeichnet, dass** die am Rand befindlichen Radialzähne (6a) und die Eingriffvertiefungen (7a) abgestimmt aufeinander in Form eines Kegelradgetriebes geschnitten sind.

11. Vorrichtung zur Verbindung von zwei Platten eines Möbelstücks nach Anspruch 1, **dadurch gekennzeichnet, dass** die Spannschraube (5) über ihre gesamte Länge mit einem Gewinde versehen ist und mindestens eine Nasennut (5e) aufweist.

12. Vorrichtung zur Verbindung von zwei Platten eines Möbelstücks nach Anspruch 1, **dadurch gekennzeichnet, dass** der Kopf (5b) der Spannschraube (5) nicht mit einem Gewinde versehen ist.

## Revendications

1. Dispositif pour raccorder deux panneaux d'un élément de mobilier, ayant un premier panneau (1) avec une boîte de jonction (1a) ayant une ouverture latérale (1b) sur l'une de ses plus grandes facettes, ouverte sur un bord adjacent à cette dernière, laquelle boîte de jonction (1a) contient un support de tension (3) habituellement cylindrique et se composant de deux parties semi-cylindriques symétriques le long du plan diamétral perpendiculaire à ce bord et ayant un axe de tension qui est également perpendiculaire à ce bord, et qui est pivoté au moyen d'un ensemble d'engrenages, et un second panneau (2) ayant un trou débouchant ou aveugle (2a) sur la facette se raccordant avec le premier panneau (1), qui peut être aligné avec l'axe de tension et contient habituellement (ou ne contient pas) un bouchon (4) ou un écrou, **caractérisé en ce que** le support de tension (3) contient une rondelle dentelée (6), axialement fixée, qui a des dents radiales périphériques externes (6a) épousant la forme des évidements de mise en prise (7a) sur une facette faisant face à la couronne d'entraînement (7) ayant une rainure d'actionneur sur sa facette opposée (7b) ; l'axe de tension est une vis de tension (5) avec une extrémité filetée (5a) raccordée avec un corps central non cylindrique (5c) et une tête (5b), et au moins une zone filetée (5a-5b) de la vis de tension (5), en contact avec une paroi interne (3a) du support de tension (3) ; la rondelle dentelée (6) a un trou central non cylindrique (6c) épousant la forme de la section du corps central non cylindrique (5c) de la vis de tension (5), formant une insertion clavetée.

2. Dispositif pour raccorder deux panneaux d'un élément de mobilier selon la revendication 1, **caractérisé en ce que** la dimension de la plage opérationnelle (9) de la vis de tension (5) entre sa position rétractée extrême à l'intérieur du support de tension (3) et sa position étendue extrême, est de préférence inférieure à la profondeur (10) du trou débouchant ou aveugle (2a) ou la longueur du filetage interne (11) du bouchon (4).

3. Dispositif pour raccorder deux panneaux d'un élément de mobilier selon la revendication 1, **caractérisé en ce que** la plage opérationnelle (9) de la vis de tension (5) est limitée par la rondelle dentelée (6) ou une partie interne (3a) du support de tension (3).

4. Dispositif pour raccorder deux panneaux d'un élément de mobilier selon la revendication 1, **caractérisé en ce que** l'au moins une paroi interne (3a) est une paroi cylindrique continue ayant un filetage réciproque par rapport à celui de la tête (5b) de la vis de tension (5).

5. Dispositif pour raccorder deux panneaux d'un élément de mobilier selon la revendication 1, **caractérisé en ce que** le corps central (5c) a une section polygonale réciproque par rapport au trou central non cylindrique (6c) de la rondelle dentelée (6).

6. Dispositif pour raccorder deux panneaux d'un élément de mobilier selon la revendication 1, **caractérisé en ce que** le corps central (5c) a au moins un chemin de clavette (5e) qui est réciproque par rapport à au moins une clavette (6b), faisant saillie dans le trou central non cylindrique (6c) de la rondelle dentelée (6).

7. Dispositif pour raccorder deux panneaux d'un élément de mobilier selon la revendication 1, **caractérisé en ce que** le corps central (5c) a une section mixte avec des parties incurvée et rectiligne, qui est réciproque par rapport au trou central non cylindrique (6c) de la rondelle dentelée (6).

8. Dispositif pour raccorder deux panneaux d'un élément de mobilier selon la revendication 1, **caractérisé en ce que** l'extrémité filetée (5a) est auto-taraudeuse pour le bois.

9. Dispositif pour raccorder deux panneaux d'un élément de mobilier selon la revendication 1, **caractérisé en ce que** la saillie arrière (5d) du corps central (5c) qui est appliquée sur la rondelle dentelée (6) ou une partie interne du support de tension (3) est la facette frontale de la tête (5b).

10. Dispositif pour raccorder deux panneaux d'un élément de mobilier selon la revendication 1, **caractérisé en ce que** les dents périphériques radiales (6a) et les évidements de mise en prise (7a) sont découpés de manière réciproque selon la forme d'un ensemble d'engrenages coniques.

11. Dispositif pour raccorder deux panneaux d'un élément de mobilier selon la revendication 1, **caractérisé en ce que** la vis de tension (5) est filetée sur toute sa longueur, et a au moins un chemin de clavette (5e).

12. Dispositif pour raccorder deux panneaux d'un élément de mobilier selon la revendication 1, **caractérisé en ce que** la tête (5b) de la vis de tension (5) n'est pas filetée.
